# EUROPEAN PATENT APPLICATION

(11) **EP 4 458 566 A1**
(43) Date of publication of application: **06.11.2024**
(21) Application number: 24170716.5
(22) Date of filing: 17.04.2024
(51) Int. Cl.: B29C 70/46, B29B 11/16, B29C 33/30, B29D 99/00, B29C 70/48

(54) **METHODS AND SYSTEMS FOR AUTOMATED STRINGER COMPACTION AND FORMING**

(30) Priority: 01.05.2023 US 202318310079
(71) Applicant: The Boeing Company, Arlington, VA 22202 (US)
(72) Inventor: TSOTSIS, Thomas K, Arlington, 22202 (US)
(74) Representative: Howson, Richard Giles Bentham

(57) **Abstract**

Examples relate to automated stringer compaction and forming techniques. An example technique involves heating one or more layers of fibrous material having thermally activatable material above an activation temperature of the thermally activatable material and forming, by a forming tool (404, 502,716), the one or more layers having thermally activatable material into a first fabric subelement (505,508). The forming tool (404, 502,716) is adjusted based on a first set of dimensions corresponding to the first fabric subelement (505, 508). The technique also involves removing the first fabric subelement (505, 508) from the forming tool (404, 502, 716), integrating the first fabric subelement (505, 508) into a preform to form a complete element where the preform includes at least the first fabric subelement (505, 508) and a second fabric subelement (505, 508). The technique further involves infusing, within a mold tool (718), the complete element with resin, and curing the complete element infused with resin to form the composite structure (300) (e.g., a composite stringer).

## Description

### FIELD

The present disclosure relates generally to composite structures, and more particularly to, techniques for automated stringer compaction and forming.

### BACKGROUND

In manufacturing, a preform is a partially formed component that is designed to be further processed into a final structure. Preforms are a versatile tool that can be used to make a wide variety of objects. For instance, aircraft preforms are made of composite materials (e.g., carbon fiber) and are used in the manufacture of lightweight, strong and durable parts of the aircraft, such as the wings, fuselage, and airframe structures. As such, modern aircraft designs use various components that are often generated using preforms, such as stringers that are used to resist bending, torsional, shear, and direct loads along the fuselage of the aircraft. Forming stringers and other components often involves either draping a full-thickness preform or applying shear to form to the desired shape, or multi-angle compaction of a full preform layup. Issues can arise during these forming techniques because using a full-thickness preform makes it difficult to form desired shapes without unwanted fiber wrinkling or buckling.

### SUMMARY

In one example, a method for manufacturing a composite structure is described. The method involves heating one or more layers of fibrous material having thermally activatable material above an activation temperature of the thermally activatable material and forming, by a forming tool, the one or more layers having thermally activatable material into a first fabric subelement. The forming tool is adjusted based on a first set of dimensions corresponding to the first fabric subelement. The method also involves removing the first fabric subelement from the forming tool, and integrating the first fabric subelement into a preform to form a complementary element, where the preform includes at least a second fabric subelement. The method further involves infusing with resin, within a mold tool, the complete element, and curing the complete element infused with resin to form the composite structure.

In another example, a system for manufacturing a composite structure is described. The system includes a heat source, a forming tool, a mold tool, and a controller. The controller is configured to cause the heat source to heat one or more layers of fibrous material having thermally activatable material above an activation temperature of the thermally activatable material and configured to form, by the forming tool, the one or more layers having thermally activatable material into a first fabric subelement. The forming tool is adjusted based on a first set of dimensions corresponding to the first fabric subelement. The controller is also configured to remove the first fabric subelement from the forming tool, assemble the first fabric subelement with a preform to form a complete element, infuse with resin, within a mold tool, the complete element, and cure the complete element infused with resin to form the composite structure.

In an additional example, a composite preform is described. The composite preform includes a first fabric subelement and at least a second fabric subelement assembled into the composite preform. The first fabric subelement is formed by heating one or more layers of fibrous material having thermally activatable material above an activation temperature of the thermally activatable material and forming, by a forming tool, the one or more layers having thermally activatable material into the first fabric subelement. The forming tool is adjusted based on a first set of dimensions corresponding to the first fabric subelement. The first fabric subelement is further formed by removing the first fabric subelement from the forming tool.

The features, functions, and advantages that have been discussed can be achieved independently in various examples or may be combined in yet other examples. Further details of the examples can be seen with reference to the following description and drawings.

### BRIEF DESCRIPTION OF THE FIGURES

The novel features believed characteristic of the illustrative examples are set forth in the appended claims. The illustrative examples, however, as well as a preferred mode of use, further objectives and descriptions thereof, will best be understood by reference to the following detailed description of an illustrative example of the present disclosure when read in conjunction with the accompanying drawings.
Figure 1 illustrates a side view of an aircraft, according to an example implementation.
Figure 2 is a simplified block diagram of the aircraft, according to an example implementation.
Figure 3A illustrates an example composite structure, according to an example implementation.
Figure 3B illustrates another view of the composite structure, according to an example implementation.
Figure 4A depicts traditional preform forming, according to an example implementation.
Figure 4B depicts another traditional preform forming, according to an example implementation.
Figure 5A depicts preform forming using an adjustable forming tool, according to an example implementation.
Figure 5B depicts another preform forming using an adjustable forming tool, according to an example implementation.
Figure 6 illustrates a flowchart of an example of a method for forming preforms, according to an example implementation.
Figure 7 illustrates a system for automated forming of composite structures, according to an example implementation.
Figure 8 illustrates another flow chart of an example of a method for automated forming of composite structures, according to an example implementation.

### DETAILED DESCRIPTION

Disclosed examples will now be described more fully hereinafter with reference to the accompanying drawings, in which some, but not all of the disclosed examples are shown. Indeed, several different examples may be described and should not be construed as limited to the examples set forth herein. Rather, these examples are described so that this disclosure will be thorough and complete and will fully convey the scope of the disclosure to those skilled in the art.

Example embodiments relate to techniques and systems for automated stringer compaction and forming. Disclosed techniques and systems can be used to efficiently form differently shaped elements, such as hat or blade stiffeners, while avoiding wrinkling and other undesired fiber distortion that often occurs when traditional forming production techniques are used.

An example technique involves using fabric containing one or more thermally activatable materials that allow heat-setting and preheating the fabrics to a temperature to activate heat-setting. For instance, an automated system may use an oven with an internal conveyor belt to heat the fabric in order to activate the thermally activatable material(s) included therein. In some cases, the fabric contains thermoplastic fabric or traditional binders that can be thermally activated to enable fabric forming with post-forming shape retention. In addition, the fabric can also be cut into subelement fabric pieces to desired dimensions by an automated fabric cutter within the automated system before being preheated to the desired forming temperature.

The technique further involves adjusting the forming tool to the desired dimensions corresponding to the specific fabric subelement to be processed and subsequently forming the subelement into the desired shape using the forming tool. The formed subelement is then removed from the forming tool and temporarily stored while the process is repeated to form other subelements with additional fabric. The forming tool can adjust to the different dimensions of each subelement thereby enabling the forming tool to complete forming of all subelements without the need for an additional forming tool, which can accelerate production while also avoiding undesired wrinkling and distortions that might arise when performing traditional processing techniques using full fabric. The automated system can include one or more robotic arms, conveyors, and/or other mechanical components that allow enable placement of fabric pieces onto the forming tool and removal of formed subelements from the forming tool.

The technique further involves assembling the formed subelements into a full preform and introducing the full preform into a mold tool. The mold tool is configured to shape the subelements into a desired form of the full preform. As such, the mold tool is used to infuse the full preform with resin and subsequently cure the full preform. In addition, because the preformed subelements are each formed to near-net shape, they are able to nest atop of each other to for near-net-shaped preform assembly. For instance, a robotic arm may align and assemble the subelements together into the full preform in combination with the mold tool.

The automated system performing the technique disclosed above or similar automated compaction and forming techniques can include different hardware and software that enables performance of the various steps. For instance, the system can form different subelements by using an adjustable forming tool that is also reconfigurable, which can involve swapping parts to enable subelements with different shapes to be formed. The system may also include one or more conveyor belts, controllers, robotic hardware, and/or one or more mold tool(s).

Disclosed techniques and systems enable improved quality and rate in high-rate fabrication of composites with reduced risk of fabric distortion that would create unwanted flaws in the composites. In addition, through full automation, the process is able to output high-quality composites with a reduced rate sensitivity.

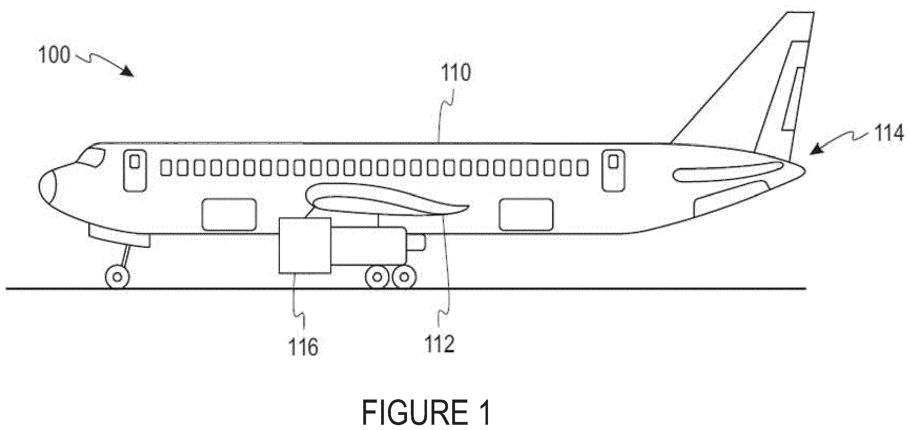

Referring now to the figures, Figure 1 illustrates a side view of an aircraft 100, according to an example implementation. As shown in Figure 1, the aircraft 100 can include a various assemblies such as, for example, a fuselage 110, wing assemblies 112, and an empennage 114. In addition, one or more propulsion units 116 can be coupled to the wing assemblies 112, the fuselage 110, and/or other portions of the aircraft 100. Although the aircraft 100 shown in Figure 1 is generally representative of a commercial passenger aircraft, the teachings of the present disclosure can be applied to other passenger aircraft, cargo aircraft, military aircraft, rotorcraft, and other types of vehicles such as, for examples, aerospace vehicles (e.g., satellites, space launch vehicles, and/or rockets), watercraft, trains, automobiles, trucks, buses, or other suitable structures having one or more composite stringers.

Within examples, the fuselage 110, the wing assemblies 112, and/or the empennage 114 can include one or more composite structures. In general, a composite structure is a structure that is formed from multiple composite materials that are bound together with sufficient strength that the composite materials act as a single unit from a structural point of view. A composite material (also called a composition material or shortened to composite, which is the common name) is a material made from two or more constituent materials with significantly different physical or chemical properties that, when combined, produce a material with characteristics different from the individual components.

In general, a preform and a composite structure are two different stages of manufacturing for composite materials. A preform is a semi-finished product that is made by laying out or shaping the reinforcing fibers (such as carbon or glass fibers) in a specific pattern or orientation, which can involve using specialized machinery or tools. The fibers are typically held together by a temporary binder or adhesive, which is later removed or incorporated into the structural matrix of the composite during final manufacturing. Preforms can take many different forms, such as fabrics, mats, or unidirectional tapes, and are used as a starting point for the manufacturing of composite structures.

In contrast, a composite structure is a finished product made by combining the fibrous preform with a matrix material, such as a resin, and curing it under controlled conditions to create a strong, lightweight structure. The matrix material bonds the fibers together, providing strength, stiffness, and other mechanical properties to the finished part. Composite structures can take many different forms, such as aircraft components. As such, examples techniques described herein can be used to produce preforms and some techniques may further involve producing composite structures by combining one or more preform(s) with a matrix material and curing it. As shown, the preform is a key intermediate step in manufacturing of composite structures, and the properties of the finished composite structure are heavily influenced by the design and quality of the preform.

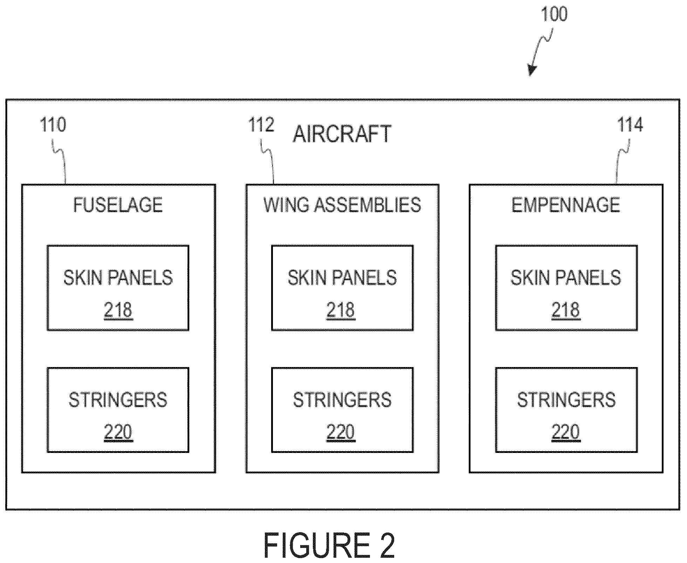

Figure 2 is a simplified block diagram of the aircraft 100, including the fuselage 110, the wing assemblies 112, and the empennage 114, according to an example. As shown in Figures 1-2, the fuselage 110, the wing assemblies 112, and the empennage 114 can each include one or more skin panels 218 and one or more composite stringers 220, which may be generated by automated systems described herein. The composite stringers 220 are configured to provide a predetermined flexural and torsional stiffness to the fuselage 110, the wing assemblies 112, and the empennage 114. For example, the composite stringers 220 can be configured to transfer bending loads in the skin panels 218, and stiffen the skin panels 218 so that the skin panels 218 do not buckle under loading.

Although Figure 2 depicts the composite stringers 220 for the fuselage 110, the wing assemblies 112, and the empennage 114, the aircraft 100 can also include the composite stringers 220 in one or more other assemblies of the aircraft 100 to stiffen and/or transfer loads on those other assemblies. Within examples, the composite stringers 220 in the fuselage 110, the wing assemblies 112, and the empennage 114 may be subject to uniaxial tension and compression and out-of-plane bending. The composite stringers 220 in the fuselage 110, the wing assemblies 112, and the empennage 114 may also be subject to additional loads including shear and pull off loads. A component under compression tends to twist, cripple and buckle. The composite stringers 220 provide strength, resist compression and tension, and provide stability against twisting, crippling, and buckling forces. For example, the composite stringers 220 can provide support structures within the fuselage 110, the wing assemblies 112, or the empennage 114 that may brace against various exerted forces.

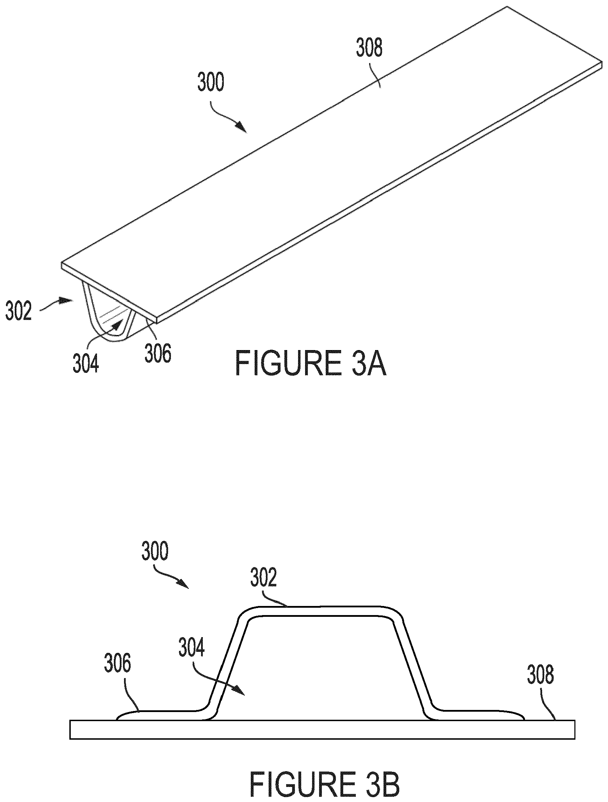

Figure 3A and Figure 3B illustrate different views of an example composite structure 300. In the illustrated arrangement, the composite structure 300 is a composite stringer that has a rounded hat section 302 that forms an internal stringer cavity 304, a pair of laterally extending flange sections 306, and a substantially flat skin section 308 that is consolidated together with the flange sections 306 during curing. As those of ordinary skill in the art will recognize, alternative stringer geometries are possible. After curing, all components shown in Figure 3A and Figure 3B form the composite structure 300, which may be implemented as part of the composite stringers 220 of the aircraft 100 shown in Figures 1-2. Within examples described herein, the composite structure 300 is fabricated using techniques and automated systems described herein.

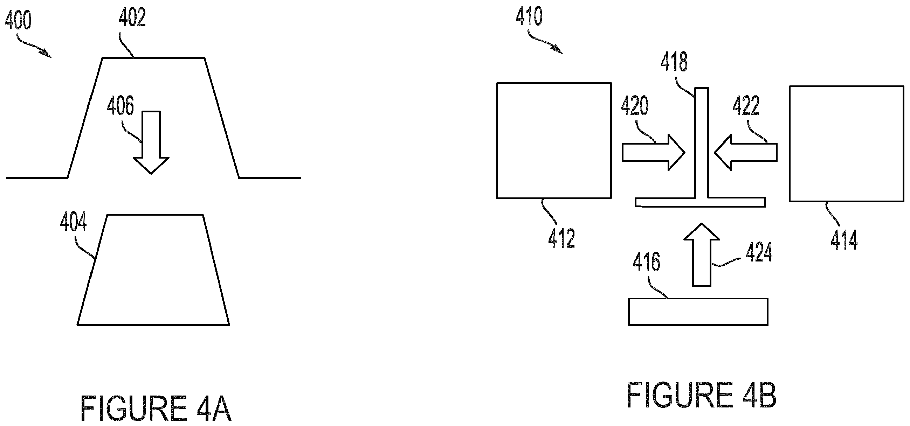

Figure 4A depicts traditional preform forming process 400, which is a traditional forming technique that involves draping a full-thickness preform 402 and applying shear 406 using the forming tool 404 to form the full-thickness preform 402 into the desired shape. Similarly, Figure 4B depicts another traditional preform forming process 410 that uses multi-angle compaction of a full preform layup. To perform the traditional process 410 shown in Figure 4B, a set of forming tool components 412, 414, 416 apply directional forces 420, 422, 424 to form preform 418 into the desired shape (e.g., T-shape). These traditional processes 400, 410 shown in Figures 4A-4B involve shaping a full-thickness preform, which can make it much more difficult to form to desired shapes without unwanted fiber wrinkling or buckling. In particular, thinner plies are better able to conform to complex shapes than thick fabrics, which can avoid the unwanted effects that might arise when performing the traditional processes 400, 410.

The following Figures represent some example processes and systems that overcome the challenges associated with performing the traditional processes 400, 410 shown in Figures 4A, 4B. Some examples involve production of a preform and other examples involve production of a composite structure, such as a composite stringer. Unlike the traditional processes 400, 410 shown in Figures 4A, 4B, the example techniques and systems do not form a full preform in one step and involve using an adjustable forming tool that can form each subelement to desired dimensions before preform assembly from subelements. In this way, these techniques and systems performing the techniques fully automate subelement forming while avoiding undesired fiber distortions.

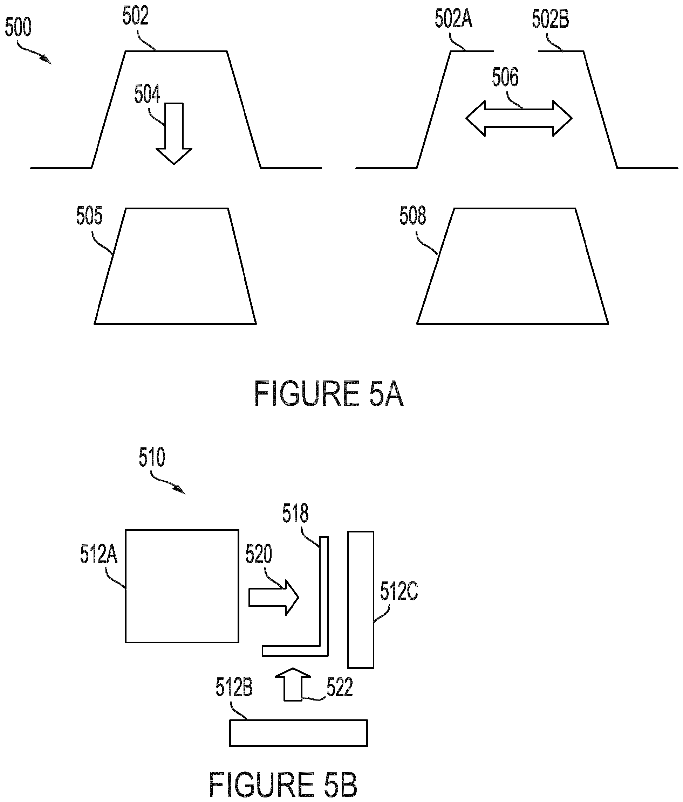

Figure 5A depicts a process 500 using an adjustable forming tool 502 for automated stringer compaction and forming. The process 500 represents an alternate approach for hat forms that uses individual plies/stacks instead of a full layup. In practice, the process 500 involves using an adjustable forming tool 502 to apply force 504 to create a fabric subelement 505. The adjustable forming tool 502 can then expand or contract to account for the changes in the dimensions of each layer of a desired preform. Thus, the adjustable forming tool 502 allows for adjustments in the dimensions applied to each layer instead of a fixed geometry. In the example shown in Figure 5A, the adjustable forming tool 502 automatically expands outward as represented by arrow 506 and into the adjustable forming tool sections 502A, 502B to then apply force to form fabric subelement 508. After forming each layer, individual layers are stored temporarily before final assembly with other formed layers to create a fully consolidated preform at desired thickness. For instance, the fabric subelements 505, 508 can be incorporated into a preform to form a complete element.

Figure 5B depicts a process 510 that similarly involves using an adjustable forming tool for subelements (e.g., fabric subelement 508) that can be incorporated into preforms. The process 510 represents an alternate approach for blade-stiffener forms, which involves using individual plies/stacks instead of a full layup. Each layer is sized to net dimensions instead of a fixed geometry. A similar approach is used for the mirror-image layer and for any additional plies needed between the flanges and for the base. Each formed layer is then temporarily stored before final assembly with the other layers to create a preform with the desired dimensions. As shown in the example, the process 510 involves using the adjustable forming tool that consists of tool components 512A, 512B, 512C configured to apply forces 520, 522 or stability to shape and form a subelement 518. Tool components 512A-512C can be adjusted to form subelements of different dimensions that can be assembled into the preform to form a complete element.

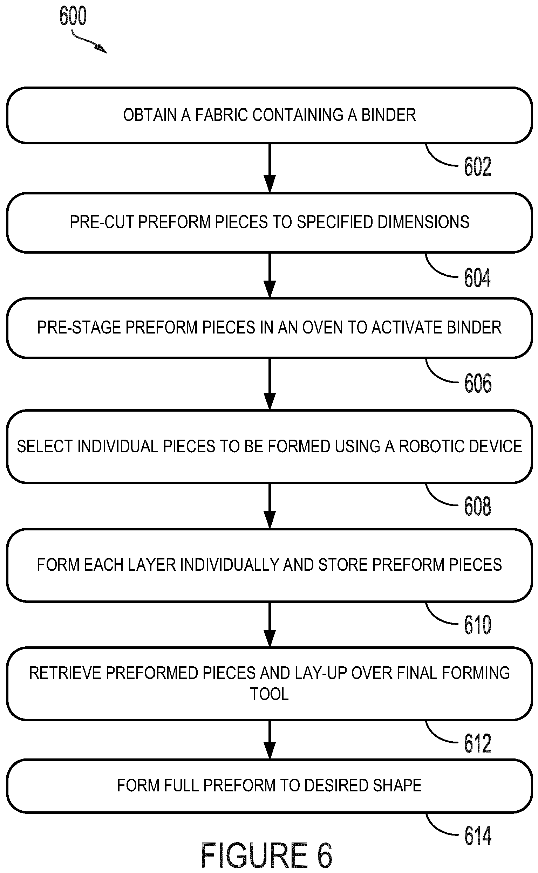

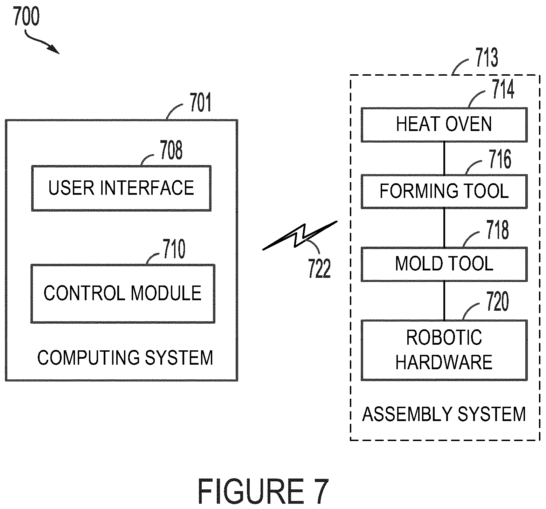

Figure 6 illustrates a flowchart of an example of a method for forming a preform, according to an example implementation. Method 600 shown in Figure 6 presents an example of a method that could be used with an automated system (e.g., system 700 shown in Figure 7) or with components of thereof. Further, the functions described with respect to Figure 6 may be supplemented by, replaced by, or combined with functions and features described herein. Further, devices or systems may be used or configured to perform logical functions presented in Figure 6.

In some instances, components of the devices and/or systems may be configured to perform the functions such that the components are actually configured and structured (with hardware and/or software) to enable such performance. In other examples, components of the devices and/or systems may be arranged to be adapted to, capable of, or suited for performing the functions, such as when operated in a specific manner. Method 600 includes one or more operations, functions, or actions as illustrated by one or more of blocks 602, 604, 606, 608, 610, 612, and 614. Although the blocks are illustrated in a sequential order, these blocks may also be performed in parallel, and/or in a different order than those described herein. Also, the various blocks may be combined into fewer blocks, divided into additional blocks, and/or removed based upon the desired implementation.

Within examples, one or more blocks of the method 600 may be represented in program code or circuitry used for controlling robotic mechanisms for forming the composite structure 300 or another composite structure. While method 600 and variations thereof may be executed automatically using, for example, one or more robotic armatures controlled by program code operating in accordance with the method 600, some tasks may be performed manually. Thus, within examples, certain functionality described with respect to the method 600 may be performed automatically while other portions can be performed manually. Alternatively, all blocks of the method 600 may be performed automatically or all blocks of the method 600 may be performed manually.

At block 602, method 600 involves obtaining a fabric containing a binder. In some instances, the fabric is a warp-knit fabric, weave, braid, or combination thereof having good through-thickness permeability. In some examples, the binder is a powder, veil, thermoplastic or thermoset, etc.

At block 604, method 600 involves pre-cutting preform pieces to specified dimensions. The quantity of pieces can depend on the desired shape of the preform.

At block 606, method 600 involves pre-staging all preform pieces in an oven such that the binder is activated. The oven can include a conveyor belt that moves the pieces through while heat is applied by the oven.

At block 608, method 600 involves selecting individual pieces to be formed using a robotic end effector (or multiple robotic devices). The robotic hardware can execute code to select the pieces used for subsequent forming. In some cases, the robotic hardware can include one or multiple sensors that can provide measurements used for selecting and moving pieces.

At block 610, method 600 involves forming each layer individually and storing at the same temperatures as in the pre-staging oven. The forming tool can be adjusted based on the desired dimensions of the layers.

At block 612, method 600 involves retrieving preformed pieces and lay-up over a final forming tool. The preforms formed using method 600 are subsequently used as stiffening elements in a larger part, such as a stringer. The final forming tool can differ from the forming tool used to form each layer at block 610.

The steps of method 600 are fully automatable, which enables method 600 to be performed at a high rate. Further, because preforms are made from dry fabric, very-high-tolerance tooling is not required because mold tooling used in producing final part can provide necessary tolerances. Preforms formed using method 600 can be self-locating within mold tooling in some implementations. In addition, preforms formed using method 600 do not require further compaction in mold tooling.

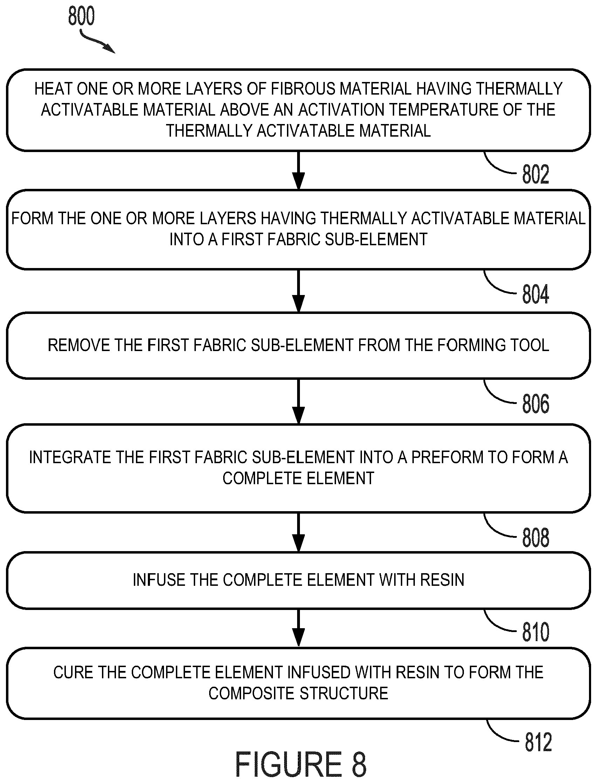

Figure 7 illustrates a system for automated forming of composite structures, according to an example implementation. The system 700 includes a computing system 701 (also referred to herein as a controller) and an assembly system 713 shown for illustration purposes. As shown in the example implementation, the computing system 701 and the assembly system 713 engage in wired or wireless communication 722 and have various components that can be used to enable the system 700 to perform various acts and/or functions, such as those described in this disclosure. The system 700 can perform method 600 shown in Figure 6 and method 800 shown in Figure 8.

As shown, the computing system 701 communicates with assembly system 713 via wired or wireless communication 722 and may include a user interface 708 and a control module 710. The user interface 708 can enable one or more users to interact with the computing system 701 and assembly system 713, including to enable input and analysis related to disclosed operations. For instance, the user interface 708 can provide alerts and/or other information related to automated stringer formation as disclosed herein. The alerts can include audio, visual, tactile, and/or other types of alerts. In some instances, the alerts can include text, audio-based text, and/or other visualizations. As such, the user interface 708 can include input components such as a keyboard, a keypad, a mouse, a touch-sensitive panel, a microphone, and/or a camera, and/or output components such as a display device (which, for example, can be combined with a touch-sensitive panel), a sound speaker, and/or a haptic feedback system. More generally, the user interface 708 can include hardware and/or software components that facilitate interaction between the computing system 701 and one or more users. A user may use user interface 708 to monitor operations executed by assembly system 713.

The control module 710 is used to manage or regulate the behavior of assembly system 713 and can monitor the performance of assembly system 713, including taking corrective actions to maintain or achieve a desired production outcome. As such, control module 710 can enable assembly system 713 to autonomously or semi-autonomously perform operations disclosed herein. In general, control module 710 can receive input signals (e.g., via a communication interface), processes them using algorithms or programmed logic, and generate output signals to control the operation of the assembly system 713. For instance, control module 710 can control and just temperature, speed, position, and other variables associated with assembly system 713.

In the example embodiment, assembly system 713 includes a heat oven 714, a forming tool 716, a mold tool 718, and robotic hardware 720. The quantity and arrangement of these components can differ within example implementations. In addition, the various components can perform operations in a systematic way to produce subelements and composites.

The heat oven 714 can include one or more specialized ovens used in industrial manufacturing to heat-treat fabrics or textiles. The fabric is loaded onto a conveyor belt or other material-handling system that moves it through the heat oven 714. The oven chamber is heated using one or more heating elements or burners, which raise the temperature of the air inside the chamber to a setpoint temperature (e.g., a threshold temperature), which can be based on the thermally activatable material associated with the fabric or textile. As such, the fabric is exposed to this hot air as it moves through the oven, causing it to heat up. Depending on the specific application, the fabric may be subjected to a specific temperature profile or heat treatment cycle as it moves through the heat oven 714. For example, the fabrics or textiles may be held at a certain temperature for a specified amount of time to achieve a desired level of heat treatment. The heat oven 714 can vary in design and operation depending on the specific manufacturing process and the types of fabrics or textiles being treated. For instance, the heat oven 714 may use specialized heating methods, such as infrared or microwave heating, to achieve more precise and uniform heating. In addition, the heat oven 714 may include features, such as exhaust systems or recirculating fans to control the temperature and airflow inside the oven.

The forming tool 716 is a specialized tool used in manufacturing to form materials into specific geometries or shapes. Unlike traditional cutting tools that remove material from a work piece, the forming tool 716 may use a combination of compression, bending, and shearing forces to deform the material into the desired shape. In the context of subelements and preforms, the forming tool 716 can be used in the production of composite materials, such as carbon-fiber-reinforced plastics (CFRPs) and glass-fiber-reinforced plastics (GFRPs).

To make a composite part using the forming tool 716, the composite material is first laid out in layers or plies, with each ply consisting of fibers (such as carbon or glass fibers) and a matrix material (such as epoxy or thermoplastic resin). The plies are then placed onto the forming tool 716, which is usually made of a rigid material such as metal or carbon fiber, and then shaped into the desired geometry. The forming tool 716 can be adjusted according to the dimensions of the subelement, which enables thin layers of fabric to be shaped and subsequently assembled together at later stages by assembly system 713. In some implementations, the forming tool 716 can be used for compression molding, which involves placing the composite material and forming tool into a press and applying heat and pressure to shape and cure the material in order to produce high-quality composite parts with improved mechanical properties.

The mold tool 718 is a device that can be used in the manufacturing of composite materials by infusing resin into a dry-fiber preform. In some implementations, the mold tool 718 is made of metal (e.g., aluminum or steel) and consists of two parts: the mold and the mold cavity. The assembly system 713 can place generated near-net-shaped, dry preforms within the mold tool 718 using robotic hardware 720, which then are infused with resin and cured within the mold tool 718. For instance, the assembly system 713 may use robotic hardware 720 (e.g., a robotic arm) to place and remove preforms. The mold tool 718 is then closed and the composite material is allowed to cure under heat and pressure for a set amount of time. Once the composite material has cured, the mold tool 718 is opened and the composite part is removed from the mold tool 718. The resulting composite part will have the desired shape and properties, as dictated by the design of the mold tool 718.

In some implementations, the mold tool 718 is designed to create the shape of a stringer, including its length, width, and thickness. In particular, the cavity of the mold tool 718 forms a shape of the stringer. The generated near-net-shaped, dry preforms are placed within the mold tool 718 and then infused with resin and cured within the mold tool 718. For instance, the mold tool 718 may move through a curing oven, which can cure the composite material by applying heat and pressure to the material in the mold tool 718 to cause the resin matrix to harden and bond with the reinforcing fibers. Once the cure is complete, the mold tool 718 can be removed from the curing oven and allowed to cool until the cured composite stringer can be removed. In some cases, the stringer may be trimmed and finished according to required specifications, which can involve additional machining or cutting.

The resin used by the assembly system 713 may include synthetic or natural materials that have the ability to harden or cure into a solid state. For instance, the resin can be a thermosetting resin, such as epoxy, biamaleimide, benzoxazine, polyimide, polyester, vinyl esters, etc. as well as blends of these and other thermosetting materials. These can be supplied in liquid form and cured by applying heat. During cure, the resin hardens and forms a strong bond with the reinforcing fibers, thereby creating a rigid and durable composite structure. Resins can be chosen for their specific properties, such as strength, stiffness, toughness, durability, and resistance to heat, chemicals, or moisture, among others. The choice of resin depends on the specific application and the desired performance characteristics of the composite material.

Robotic hardware 720 can enable automated forming and production of composite structures by assembly system 713. In addition, robotic hardware 720 can be used to handle fabrics to perform production techniques described herein. As such, the type, configuration, and quantity of components within robotic hardware 720 can differ within example implementations. Robotic hardware 720 can include automated fiber-placement machines that use robotic arms to precisely lay down fiber reinforcements on a mold surface to create complex composite shapes. Robotic hardware 720 can include automated tape-laying machines in some examples. In some cases, robotic hardware 720 includes pick-and-place robots that can transfer composite parts and molds between workstations on an assembly line of assembly system 713 and end effectors attached to robotic arms to handle and manipulate composite parts. For instance, end effectors can include grippers and suction cups that can be used to move composite and composite parts. Robotic hardware 720 can also include automated trimming and cutting machines and automated quality control systems that use hardware and sensors to detect defects or imperfections in the composite parts, which enables early detection and correction. As such, these various components can work together to create highly efficient and precise manufacturing that is capable of producing high-quality composite structures at a high rate of production.

As further shown, the computing system 701 and the assembly system 713 can communicate with each other and may share components, power sources, etc. in some implementations. Wired or wireless communication 722 represented in Figure 7 between the computing system 701 and the assembly system 713 can include one or more wired and/or wireless communication technologies.

In some examples, the system 700 performs automated, sequential forming/pre-consolidation of preform subelements and their assembly into a full preform, which can be infused with a liquid resin and then cured into a near-net-shaped or net-shaped part. Forming of subelements minimizes unwanted fiber distortion, such as wrinkling and in-plane fiber misalignment.

Figure 8 illustrates another flow chart of an example of a method for automated forming of composite structures. Similar to method 600 shown in Figure 6, method 800 could be used with an automated system (e.g., system 700 shown in Figure 7) or with components of thereof. Further, the functions described with respect to Figure 8 may be supplemented by, replaced by, or combined with functions and features described herein. Further, devices or systems may be used or configured to perform logical functions presented in Figure 8. Method 800 includes one or more operations, functions, or actions as illustrated by one or more of blocks 802, 804, 806, 808, 810, and 812. Within examples, one or more blocks of the method 800 may be represented in program code or circuitry used for controlling robotic mechanisms for forming the composite structure 300 or another composite structure. While method 800 and variations thereof may be executed automatically using, for example, one or more robotic armatures controlled by program code operating in accordance with the method 800, some tasks may be performed manually in some implementations. Thus, within examples, certain functionality described with respect to the method 600 may be performed automatically while other portions can be performed manually. Alternatively, all blocks of the method 800 may be performed automatically or all blocks of the method 800 may be performed manually.

At block 802, method 800 involves heating one or more layers of fibrous material having thermally activatable material above an activation temperature of the thermally activatable material. For instance, the layers of fibrous material are heated using an oven that includes an internal conveyor belt or another type of oven without the conveyor belt, such as the heat oven 714 shown in Figure 7.

In some instances, the one or more layers of fibrous material includes one or more layers of fabric and/or carbon fiber and the thermally activatable material is a predetermined percentage of thermoplastic material. As such, the one or more layers of fibrous material are heated above a tackification temperature of the thermoplastic material. The predetermined percentage of thermoplastic material retains a permeability of the one or more layers of fibrous material upon cooling below the tackification temperature of the thermoplastic material. The tackification temperature can represent a threshold temperature in some implementations.

At block 804, method 800 involves forming, by a forming tool, the one or more layers having thermally activatable material into a first fabric subelement. The forming tool is adjusted based on a first set of dimensions corresponding to the first fabric subelement. For instance, the forming tool can be implemented as the adjustable forming tool 716 described with respect to Figure 7.

At block 806, method 800 involves removing the first fabric subelement from the forming tool. For instance, a robotic arm or other robotic hardware may remove the first fabric subelement and other subelements from the forming tool in an automated manner in some implementations. The robotic arm and/or other mechanical hardware can place the first fabric subelement in a storage until other subelements are ready for assembly.

At block 808, method 800 involves integrating the first fabric subelement into a preform to form a complete element. The preform includes the first fabric subelement and at least a second fabric subelement. In some implementations, the fabric subelements are assembled into a hat. In other implementations, the fabric subelements are assembled into a blade stiffener. Robotic hardware and/or other devices can be used to assemble subelements together in an automated manner.

At block 810, method 800 involves infusing, within a mold tool, the complete element with resin. Resin is a critical component in the manufacturing of composite materials, providing the matrix material that binds the reinforcing fibers together and gives the finished product its mechanical properties.

At block 812, method 800 involves curing the complete element infused with resin to form the composite structure. For instance, the composite structure can be a stringer used for an aircraft. Curing can involve transforming the semi-solid resin into a solid, durable material via applying heat, pressure, or a combination of both.

In some implementations, method 800 further involves cooling the one or more layers formed into the first fabric subelement below the activation temperature to harden the thermally activatable material. A shape of the first fabric subelement is retained by the hardened thermally activatable material.

In an example implementation, method 800 further involves adjusting the forming tool based on a second set of dimensions corresponding to the second fabric subelement and then forming, using the forming tool, one or more layers of fibrous material having thermally activatable material heated above the activation temperature into the second fabric subelement. The second fabric subelement is then removed from the forming tool. In some instances, method 600 also involves adjusting the forming tool based on a third set of dimensions corresponding to a third fabric subelement, forming, using the forming tool, one or more layers of fibrous material having thermally activatable material heated above the activation temperature into the third fabric subelement, and removing the third fabric subelement from the forming tool. The fabric subelement, the second fabric subelement, and the third fabric subelement are assembled into the preform.

In some implementations, method 800 also involves removing a first part from the forming tool and adding a second part onto the forming tool. The first part is configured to form a first predetermined shape based on the first fabric subelement and the second part is configured to form a second predetermined shape based on the second fabric subelement.

By the term "substantially" and "about" used herein, it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

Different examples of the system(s), device(s), and method(s) disclosed herein include a variety of components, features, and functionalities. It should be understood that the various examples of the system(s), device(s), and method(s) disclosed herein may include any of the components, features, and functionalities of any of the other examples of the system(s), device(s), and method(s) disclosed herein in any combination or any sub-combination, and all of such possibilities are intended to be within the scope of the disclosure.

The description of the different advantageous arrangements has been presented for purposes of illustration and description, and is not intended to be exhaustive or limited to the examples in the form disclosed. Many modifications and variations will be apparent to those of ordinary skill in the art. Further, different advantageous examples may describe different advantages as compared to other advantageous examples. The example or examples selected are chosen and described in order to explain the principles of the examples, the practical application, and to enable others of ordinary skill in the art to understand the disclosure for various examples with various modifications as are suited to the particular use contemplated.

Also described herein are the following numbered clauses:
Clause 1. A method for manufacturing a composite structure comprising:
   heating one or more layers of fibrous material having thermally activatable material above an activation temperature of the thermally activatable material;
   forming, by a forming tool, the one or more layers having thermally activatable material into a first fabric subelement, wherein the forming tool is adjusted based on a first set of dimensions corresponding to the first fabric subelement;
   removing the first fabric subelement from the forming tool;
   integrating the first fabric subelement into a preform to form a complete element, wherein the preform includes at least the first fabric subelement and a second fabric subelement;
   infusing, within a mold tool, the complete element with resin; and
   curing the complete element infused with resin to form the composite structure.
Clause 2. The method of clause 1, further comprising:
   adjusting the forming tool based on a second set of dimensions corresponding to the second fabric subelement;
   forming, using the forming tool, one or more layers of fibrous material having thermally activatable material heated above the activation temperature into the second fabric subelement; and
   removing the second fabric subelement from the forming tool.
Clause 3. The method of clause 2, further comprising:
   adjusting the forming tool based on a third set of dimensions corresponding to a third fabric subelement;
   forming, using the forming tool, one or more layers of fibrous material having thermally activatable material heated above the activation temperature into the third fabric subelement; and
   removing the third fabric subelement from the forming tool.
Clause 4. The method of clause 3, wherein integrating the first fabric subelement into the preform to form the complete element comprises:
   integrating the first fabric subelement, the second fabric subelement, and the third fabric subelement into the preform to form the complete element.
Clause 5. The method of any preceding clause, further comprising:
   cooling the one or more layers formed into the first fabric subelement below the activation temperature to harden the thermally activatable material, wherein a shape of the first fabric subelement is retained by the hardened thermally activatable material.
Clause 6. The method of any preceding clause, further comprising:
   removing a first part from the forming tool, wherein the first part is configured to form a first predetermined shape based on the first fabric subelement; and
   adding a second part onto the forming tool, wherein the second part is configured to form a second predetermined shape based on the second fabric subelement.
Clause 7. The method of any preceding clause, wherein heating one or more layers of fibrous material comprises:
   heating the one or more layers of fibrous material using an oven that includes an internal conveyor belt.
Clause 8. The method of any preceding clause, wherein integrating the first fabric subelement into the preform to form the complete element comprises:
   assembling the first fabric subelement and at least the second fabric subelement into a hat.
Clause 9. The method of any preceding clause, wherein integrating the first fabric subelement into the preform to form the complete element comprises:
   assembling the first fabric subelement and at least the second fabric subelement into a blade stiffener.
Clause 10. The method of any preceding clause, wherein one or more layers of fibrous material includes one or more layers of fabric.
Clause 11. The method of clause 10, wherein the one or more layers of fabric includes carbon fiber.
Clause 12. The method of any preceding clause, wherein the thermally activatable material comprises:
   a predetermined percentage of thermoplastic material.
Clause 13. The method of clause 12, wherein heating one or more layers of fibrous material having thermally activatable material comprises:
   heating the one or more layers of fibrous material above a tackification temperature of the thermoplastic material.
Clause 14. The method of clause 13, wherein the predetermined percentage of thermoplastic material retains a permeability of the one or more layers of fibrous material upon cooling below the tackification temperature of the thermoplastic material.
Clause 15. The method of any preceding clause, wherein heating one or more layers of fibrous material having thermally activatable material above the activation temperature comprises:
   heating the one or more layers of fibrous material using an oven.
Clause 16. The method of any preceding clause, wherein removing the first fabric subelement from the forming tool comprises:
   removing the first fabric subelement from the forming tool via a robotic arm.
Clause 17. The method of clause 16, further comprising:
   placing the first fabric subelement in a storage by the robotic arm.
Clause 18. A system for manufacturing a composite structure comprising:
   a sheat source;
   a forming tool;
   a mold tool; and
   a controller configured to:
      cause the heat source to heat one or more layers of fibrous material having thermally activatable material above an activation temperature of the thermally activatable material;
      form, by the forming tool, the one or more layers having thermally activatable material into a first fabric subelement, wherein the forming tool is adjusted based on a first set of dimensions corresponding to the first fabric subelement;
      remove the first fabric subelement from the forming tool;
      assemble the first fabric subelement with a preform to form a complete element;
      infuse, within the mold tool, the complete element with resin; and
      cure the complete element infused with resin to form the composite structure.
Clause 19. A composite preform comprising:
   a first fabric subelement and at least a second fabric subelement assembled into the composite preform,
   wherein the first fabric subelement is formed by:
      heating one or more layers of fibrous material having thermally activatable material above an activation temperature of the thermally activatable material;
      forming, by a forming tool, the one or more layers having thermally activatable material into the first fabric subelement, wherein the forming tool is adjusted based on a first set of dimensions corresponding to the first fabric subelement; and
      removing the first fabric subelement from the forming tool.
Clause 20. The composite preform of clause 19, wherein the second fabric subelement is formed by:
   adjusting the forming tool based on a second set of dimensions corresponding to the second fabric subelement;
   forming, using the forming tool, one or more layers of fibrous material having thermally activatable material heated above the activation temperature into the second fabric subelement; and
   removing the second fabric subelement from the forming tool.

## Claims

1. A method (600, 800) for manufacturing a composite structure (300) comprising:
heating one or more layers of fibrous material having thermally activatable material above an activation temperature of the thermally activatable material;
forming, by a forming tool (404, 502, 716), the one or more layers having thermally activatable material into a first fabric subelement (518, 505, 508), wherein the forming tool (404, 502, 716) is adjusted based on a first set of dimensions corresponding to the first fabric subelement (518, 505, 508);
removing the first fabric subelement (518, 505, 508) from the forming tool (404, 502, 716);
integrating the first fabric subelement (518, 505, 508) into a preform (418) to form a complete element, wherein the preform (418) includes at least the first fabric subelement (518, 505, 508) and a second fabric subelement (518, 505, 508);
infusing, within a mold tool (404, 502, 716), the complete element with resin; and
curing the complete element infused with resin to form the composite structure (300).

2. The method (600, 800) of claim 1, further comprising:
adjusting the forming tool (404, 502, 716) based on a second set of dimensions corresponding to the second fabric subelement (518, 505, 508);
forming, using the forming tool (404, 502, 716), one or more layers of fibrous material having thermally activatable material heated above the activation temperature into the second fabric subelement (518, 505, 508); and
removing the second fabric subelement (518, 505, 508) from the forming tool (404, 502, 716).

3. The method (600, 800) of claim 2, further comprising:
adjusting the forming tool (404, 502, 716) based on a third set of dimensions corresponding to a third fabric subelement (518, 505, 508);
forming, using the forming tool (404, 502, 716), one or more layers of fibrous material having thermally activatable material heated above the activation temperature into the third fabric subelement (518, 505, 508); and
removing the third fabric subelement (518, 505, 508) from the forming tool (404, 502, 716).

4. The method of claim 3, wherein integrating the first fabric subelement (518, 505, 508) into the preform (418) to form the complete element comprises:
integrating the first fabric subelement (518, 505, 508), the second fabric subelement (518, 505, 508), and the third fabric subelement (518, 505, 508) into the preform (418) to form the complete element.

5. The method (600, 800) of any preceding claim, further comprising:
cooling the one or more layers formed into the first fabric subelement (518, 505, 508) below the activation temperature to harden the thermally activatable material, wherein a shape of the first fabric subelement (518, 505, 508) is retained by the hardened thermally activatable material.

6. The method (600, 800) of any preceding claim, further comprising:
removing a first part from the forming tool (404, 502, 716), wherein the first part is configured to form a first predetermined shape based on the first fabric subelement (518, 505, 508); and
adding a second part onto the forming tool (404, 502, 716), wherein the second part is configured to form a second predetermined shape based on the second fabric subelement (518, 505, 508).

7. The method (600, 800) of any preceding claim, wherein heating one or more layers of fibrous material comprises:
heating the one or more layers of fibrous material using an oven that includes an internal conveyor belt.

8. The method (600, 800) of any preceding claim, wherein integrating the first fabric subelement (518, 505, 508) into the preform (418) to form the complete element comprises:
assembling the first fabric subelement (518, 505, 508) and at least the second fabric subelement (518, 505, 508) into a hat.

9. The method (600, 800) of any preceding claim, wherein integrating the first fabric subelement (518, 505, 508) into the preform (418) to form the complete element comprises:
assembling the first fabric subelement (518, 505, 508) and at least the second fabric subelement (518, 505, 508) into a blade stiffener.

10. The method (600, 800) of any preceding claim, wherein the one or more layers of fibrous material includes one or more layers of fabric; and optionally wherein the one or more layers of fabric includes carbon fiber.

11. The method (600, 800) of any preceding claim, wherein the thermally activatable material comprises:
a predetermined percentage of thermoplastic material.

12. The method of claim 11, wherein heating one or more layers of fibrous material having thermally activatable material comprises:
heating the one or more layers of fibrous material above a tackification temperature of the thermoplastic material; and optionally, wherein the predetermined percentage of thermoplastic material retains a permeability of the one or more layers of fibrous material upon cooling below the tackification temperature of the thermoplastic material.

13. The method (600, 800) of any preceding claim, wherein heating one or more layers of fibrous material having thermally activatable material above the activation temperature comprises:
heating the one or more layers of fibrous material using an oven.

14. The method (600, 800) of any preceding claim, wherein removing the first fabric subelement (518, 505, 508) from the forming tool (404, 502, 716) comprises:
removing the first fabric subelement (518, 505, 508) from the forming tool (404, 502, 716) via a robotic arm; and optionally, the method further comprising:
placing the first fabric subelement (518, 505, 508) in a storage by the robotic arm.

15. A system (700, 701) for manufacturing a composite structure comprising:
a heat source;
a forming tool (404, 502, 716);
a mold tool (404, 502, 716, 718); and
a controller configured to carry out the method of any preceding claim.
